# EUROPÄISCHE PATENTSCHRIFT

(11) **EP 3 438 571 B1**
(45) Veröffentlichungstag und Bekanntmachung des Hinweises auf die Patenterteilung: **25.06.2025**
(21) Anmeldenummer: 18182492.1
(22) Anmeldetag: 09.07.2018
(51) Int. Cl.: F25B 21/02, B32B 37/08, B32B 43/00, B29C 35/16

(54) **KÜHLVORRICHTUNG UND VERFAHREN ZUM KÜHLEN EINES AUS MEHREREN SCHICHTEN BESTEHENDEN LAMINATVERBUNDES**
COOLING DEVICE AND METHOD FOR COOLING OF A MULTI-LAYERED LAMINATE COMPOSITE
DISPOSITIF DE REFROIDISSEMENT ET PROCÉDÉ DE REFROIDISSEMENT D'UN COMPOSITE STRATIFIÉ COMPOSÉ D'UNE PLURALITÉ DE COUCHES

(30) Priorität: 03.08.2017 DE 102017117605
(43) Veröffentlichungstag der Anmeldung: 06.02.2019
(73) Patentinhaber: Bundesdruckerei GmbH, 10969 Berlin (DE)
(72) Erfinder: Freier, Sebastian, 30455 Hannover (DE); Iphöfer, Alexander, 32457 Porta Westfalica (DE); Manko, Detlef, 32457 Porta Westfalica (DE); Frost, Dietmar, 31785 Hameln (DE)
(74) Vertreter: Mammel und Maser Patentanwälte PartG mbB

(56) Entgegenhaltungen:
- EP-A1- 0 677 786
- DE-T2- 69 404 027
- US-A1- 2002 027 586

## Beschreibung

Die Erfindung betrifft eine Kühlvorrichtung für zumindest einen aus mehreren Schichten bestehenden Laminatverbund sowie ein Verfahren zu dessen Kühlung.

Aus der US 5,637,174 A ist eine Vorrichtung zur automatischen Herstellung einer Identifikationskarte bekannt. Wenigstens zwei Schichten werden jeweils einer Druckstation zugeführt und darauffolgend in einer Schneidvorrichtung geschnitten und zusammengeführt. Anschließend werden die Schichten einer Laminiervorrichtung zugeführt. Diese umfasst zwei gegenläufig zueinander umlaufende Transportbänder, zwischen denen die Schichten aufgenommen und zunächst entlang einer Heizstation und darauffolgend entlang einer Kühlstation geführt werden. Darauffolgend wird der Laminatverbund einer weiteren Bearbeitungsstation zugeführt.

Aus der EP 0 677 786 A1 ist eine Laminiereinheit und eine Entwicklervorrichtung bekannt. Nachdem ein Laminat die Laminiereinrichtung verlassen hat, wird dies der Entwicklervorrichtung zugeführt, so dass diese Materialbahn mit einer Entwicklerflüssigkeit besprüht wird. Darauffolgend erfolgt eine Trocknung der Materialbahn. Beidseitig zur Materialbahn sind Luftkanäle vorgesehen, welche jeweils auf die Seite der Materialbahn, zu welcher die Kanäle zugerichtet sind, eine Heißluftströmung ausgeben.

Aus der DE 694 04 027 T2 ist ein Verfahren und eine Vorrichtung zur Herstellung eines Laminats bekannt. Das Laminat wird durch eine Wärmeeinrichtung und darauffolgend durch eine Heiz-/Kühlzone hindurchgeführt, bevor das Laminat eine Abschreckvorrichtung durchläuft. In der Heiz-/Kühlzone wird eine Erwärmung oder Kühlung durchgeführt, indem beidseitig und in entgegengesetzter Richtung Heiz- oder Kühlströme auf das bandförmige Material zugeführt werden.

Ein Laminatverbund umfasst mehrere Schichten, die durch ein Heißklebemittel in einer Laminationsvorrichtung miteinander verbunden werden. Vor der Weiterverarbeitung eines solchen Laminatverbundes, beispielsweise einem Stanzen des Laminatverbundes auf ein vorbestimmtes Format, ist es erforderlich, dass das Heißklebemittel abgebunden ist, um zu vermeiden, dass beispielsweise während des Stanzvorganges Kleberückstände in Form von Fäden entstehen und sich unsaubere Stanzkanten an dem Laminatverbund bilden.

Der Erfindung liegt die Aufgabe zugrunde, eine Kühlvorrichtung für zumindest einen aus mehreren Schichten bestehenden Laminatverbund sowie ein Verfahren zur Kühlung eines solchen Laminatverbundes vorzuschlagen, sodass ein aus einer Laminatvorrichtung herausgeführter Laminatverbund innerhalb kurzer Zeit weiterverarbeitet werden kann.

Diese Aufgabe wird durch eine Kühlvorrichtung für zumindest einen aus mehreren Schichten bestehenden Laminatverbund gelöst, welche ein Gehäuse umfasst, das zumindest teilweise eine Transportstrecke umgibt, entlang welcher der zumindest eine Laminatverbund verfahren wird, wobei das Gehäuse eine Eingangsöffnung und eine Ausgangsöffnung aufweist, um den Laminatverbund durch das Gehäuse hindurchzuführen. Beidseitig zur Transportstrecke ist in dem Gehäuse eine Kühleinrichtung angeordnet, welche gemeinsam zumindest eine Luftströmung erzeugen, die quer zur Transportstrecke ausgerichtet ist und eine Kühlstrecke bildet. Dadurch wird ein noch aufgeheizter Laminatverbund in kurzer Zeit heruntergekühlt. Durch die Erzeugung der Luftströmung quer zur Transportrichtung des Laminatverbunds kann ein hoher Wärmeabtransport aus dem Laminatverbund ermöglicht sein. Innerhalb relativ kurzer Zeit kann der Laminatverbund auf die erforderliche Temperatur heruntergekühlt werden, um anschließend in einem Nachfolgeprozess eine weitere Verarbeitung vorzunehmen. Beispielsweise kann bei einem Stanzprozess als Nachfolgeprozess ein rückstandsfreies Stanzen ermöglicht sein.

Die Kühlvorrichtung weist bevorzugt ein Gehäuse mit einem tunnelförmigen Durchgang auf, entlang dem sich die Transportstrecke erstreckt. Dadurch kann ein kontinuierliches Hindurchführen des zumindest einen Laminatverbundes, beispielsweise mit einem Transportband einer Transportvorrichtung, ermöglicht sein, sodass auch mehrere Laminatverbünde gleichzeitig durch die Kühlvorrichtung hindurchführbar sind. Dadurch kann die Taktzeit bei der Herstellung solcher Laminatverbünde erhöht sein.

Eine weitere vorteilhafte Ausgestaltung der Kühlvorrichtung sieht vor, dass Luftleitelemente im Gehäuse angeordnet sind, die sich bis zur Transportstrecke erstrecken. Dadurch kann eine gezielte Luftführung für ein verbessertes Abtragen der Wärme aus dem Laminatverbund erzielt werden.

Vorteilhafterweise erstrecken sich die Luftleitelemente entlang der Transportstrecke, die zwischen der Eingangsöffnung und der Ausgangsöffnung im Gehäuse vorgesehen sind. Dadurch kann trotz eines nur teilweise geschlossenen Gehäuses hinsichtlich der Luftströmung ein quasi geschlossener Bereich zur Kühlung des zumindest einen Laminatverbundes erzielt werden.

Im Gehäuse der Kühlvorrichtung sind bevorzugt thermoelektrische Kühleinrichtungen zur Erzeugung des Luftstromes vorgesehen. Solche thermoelektrischen Kühleinrichtungen weisen den Vorteil auf, dass diese einen geringen Bauraum benötigen. Zudem kann in einfacher Weise eine elektrische Ansteuerung erfolgen. Zusätzliche Kühlmedien sind nicht erforderlich.

Die thermoelektrische Kühleinrichtung umfasst bevorzugt zumindest ein Peltierelement und eine damit verbundene Kühlrippenanordnung, wobei eine Kühlrippenanordnung mit einem Ventilator zum Gehäuseinnenraum weisend und eine weitere Kühlrippenanordnung mit einem Ventilator zur Gehäuseaußenseite weisend angeordnet ist. Dies stellt einen einfachen und platzsparenden Aufbau für eine solche Kühleinrichtung dar.

Die Kühleinrichtungen werden zur Erzeugung der Luftströmung quer zur Transportstrecke bevorzugt paarweise einander zugeordnet und sind beidseitig der Transportstrecke positioniert. Dabei weisen bei einer ersten der beiden Kühlvorrichtungen die Ventilatoren die gleiche Strömungsrichtung auf, die vom Gehäuseinnenraum zur Außenseite gerichtet ist. Bei der zweiten der beiden Kühlvorrichtungen ist der zur Innenseite des Kühlraums angeordnete Ventilator mit einer Strömungsrichtung zur Transportstrecke ausgerichtet und der zur Außenseite des Gehäuses weisende Ventilator mit einer Strömungsrichtung nach innen in das Gehäuse ausgerichtet ist. Innerhalb dem Gehäuse der Kühlvorrichtung kann eine gemeinsame Luftströmung erzeugt werden. Dadurch kann eine verbesserte Absenkung der Temperatur im Kühlraum, also innerhalb des Gehäuses der Kühlvorrichtung, erfolgen.

Bevorzugt sind mehrere paarweise zueinander ausgerichtete Kühleinrichtungen entlang der Transportstrecke im Gehäuse vorgesehen und bilden eine Kühlstrecke. Mehrere Laminatverbünde können gleichzeitig gefüllt werden.

Des Weiteren kann zur Verbesserung der Kühlleistung vorteilhafterweise der ersten Kühleinrichtung zugeordnet außerhalb der Luftleitelemente jeweils ein weiteres Strömungselement vorgesehen sein, durch welches ein Teil des Luftstromes des ersten innenliegenden Ventilators wieder in das Gehäuse gekühlt zurückgeführt wird. Dadurch kann eine Art Kühlvorhang geschaffen werden, der die freien Bereiche zwischen der Ein- und Ausgangsöffnung sowie der hindurchgeführten Transportvorrichtung, insbesondere Transportband, mit dem Laminatverbund schließt.

Die der Erfindung zugrundeliegende Aufgabe wird durch ein Verfahren zum Kühlen eines Laminatverbundes aus mehreren Schichten gelöst, bei dem der aus der Laminatvorrichtung herausgeführte und noch erwärmte Laminatverbund entlang einer Transportstrecke verfahren und durch eine Kühlvorrichtung hindurchgeführt wird und bei dem in der Kühlvorrichtung eine Luftströmung erzeugt wird, welcher die Transportstrecke kreuzt und eine Kühlstrecke bildet, innerhalb der die Wärme vom Laminatverbund abtransportiert wird. Dieses Verfahren weist den Vorteil auf, dass eine schnelle Abkühlung erzielt wird. Zudem können mehrere Laminatverbünde gleichzeitig durch die Kühlvorrichtung hindurchgeführt und gekühlt werden können. Dadurch kann die Taktzeit für die Bearbeitung in einem Nachfolgeprozess verringert werden.

Des Weiteren ist bevorzugt vorgesehen, dass der Luftstrom mit einer thermoelektrischen Kühleinrichtung erzeugt wird, wobei beidseitig zur Transportstrecke jeweils eine thermoelektrische Kühleinrichtung positioniert wird. Dadurch kann ein effizientes Herunterkühlen ermöglicht sein.

Der durch die Kühleinrichtung erzeugte Luftstrom wird vorteilhafterweise durch Luftleitelemente geführt, welche quer zur Transportstrecke ausgerichtet sind. Dadurch kann ein Volumenstrom mit einer erhöhten Strömungsgeschwindigkeit erzielt werden, durch welche der Wärmeabtrag aus dem Laminatverbund erhöht wird. Somit kann die Abkühldauer reduziert werden.

Des Weiteren erstrecken sich die Luftleitelemente bevorzugt zwischen einer Eingangsöffnung und Ausgangsöffnung innerhalb des Gehäuses. Dadurch wird der Kühlraum beziehungsweise die Kühlstrecke einerseits beschränkt und andererseits eine erhöhte Effizienz bei der Kühlung erzielt.

Zur schnelleren Abkühlung des zumindest einen Laminatverbundes wird der Laminatverbund stehend durch die einander paarweise zugeordneten Kühleinrichtungen hindurchgeführt und die erzeugte Luftströmung parallel zur Vorder- und Rückseite des Laminatverbundes ausgerichtet. Dadurch können geringere Strömungsgeschwindigkeiten für einen erhöhten Wärmeabtrag genügen. Dies ermöglicht wiederum eine Reduzierung bei den Kosten zur Ausgestaltung einer solchen Kühlvorrichtung.

Durch die Kühleinrichtung wird bevorzugt ein Laminatverbund gekühlt, der durch Verbinden von wenigstens zwei Schichten unmittelbar miteinander oder mit Hilfsmaterialien hergestellt ist. Das unmittelbare Verbinden von wenigstens zwei Schichten kann durch eine Falzlamination oder eine Heißlamination erfolgen. Insbesondere werden die Oberflächen der Schichten oder die Schichten aufgeheizt, so dass diese die jeweilige Glasübergangstemperatur erreichen und darauffolgend unter entsprechendem Druck miteinander verbunden werden. Alternativ kann vorgesehen sein, dass die wenigstens zwei Schichten mit einem Hilfsmaterial wie beispielsweise einem thermisch reaktiven Klebstoff, verbunden werden. Der Laminatverbund kann durch Heißkleben, insbesondere unter Verwendung eines Hotmelt-Klebemittels, oder durch ein Heißverpressen hergestellt sein.

Eine weitere bevorzugte Ausgestaltung des Verfahrens sieht vor, dass als Hilfsmaterial auch ein unter Strahlung aktivierbares Klebemittel eingesetzt werden kann.

Der durch die Kühlvorrichtung hindurchgeführte Laminatverbund wird bevorzugt aus mehreren voneinander abweichenden Schichten hergestellt. Beispielsweise ist als Laminatverbund eine Datenseite oder Personalisierdatenseite vorgesehen, welche aus wenigstens zwei thermoplastischen Schichten besteht und zwischen diesen zumindest zwei Schichten oder an einer dieser Schichten eine Lasche angebunden wird, welche aus einer Gewebeschicht oder aus einer Gewebe- Kunststoff-Verbundschicht besteht. Auch kann der Laminatverbund als eine Buchdecke, beispielsweise aus Pappe, Papier oder einem Papier-Kunststoffverbund, vorgesehen sein, welche einen Bucheinband umfasst. Auch kann der Laminatverbund als ein Reisepass ausgebildet sein, bei welchem beispielsweise ein Buchblock mit einem Bucheinband oder einer Buchdecke verbunden wird. Nach dem Kühlen dieses Laminatverbundes kann ein Schneiden oder Stanzen auf ein Endformat erfolgen.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
Figur 1 eine schematische Ansicht einer Kühlvorrichtung, die einer Laminationsvorrichtung nachgeschalten ist,
Figur 2 eine perspektivische Ansicht der Kühlvorrichtung, und
Figur 3 eine perspektivische Ansicht von oben im Schnitt auf die Kühlvorrichtung gemäß Figur 2.

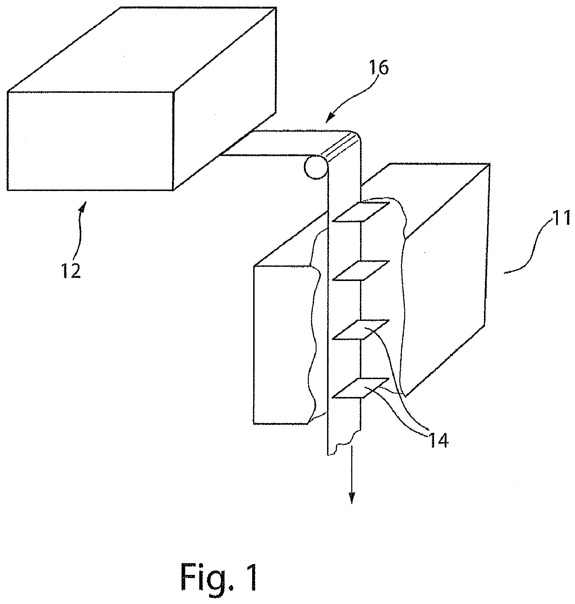

In Figur 1 ist perspektivisch eine Kühlvorrichtung 11 dargestellt, die einer Laminationsvorrichtung 12 nachgeschalten ist. In der Laminationsvorrichtung 12 wird ein Laminatverbund 14 aus mehreren Schichten hergestellt. Die einzelnen Schichten können aus organischem Polymerwerkstoff und/oder Papier und/oder Pappe oder aus einer Mischung der vorgenannten Materialien bestehen. Diese werden mit einem temperaturaktivierbaren Klebemittel unter Einwirkung von Druck und/oder Temperatur in der Laminationsvorrichtung 12 miteinander verbunden. Die zumindest eine aus organischem Polymerwerkstoff bestehende Schicht kann beispielsweise aus Polycarbonat (PC), ganz besonders Bisphenol-A-Polycarbonat, Carboxy-modifziertem PC, Polyethylenterephthalat (PET), dessen Derivaten wie glykolmodifiziertem PET (PETG), Carboxy-modifiziertem PET, Polyethylennaphthalat (PEN), Polyvinylchlorid (PVC), Polyvinylbutyral (PVB), Polymethylmethacrylat (PMMA), Polyimid (PI) Polyvinylalkohol (PVA), Polystyrol (PS), Polyvinylphenol (PVP), Polypropylen (PP), Polyethylen (PE), thermoplastischen Elastomeren (TPE), insbesondere thermoplastischem Polyurethan (TPU), Acrylnitril-Butadien-Styrol-Copolymer (ABS) und/oder deren Derivaten, bestehen.

Der Laminatverbund 14 wird aus der Laminationsvorrichtung 12 herausgeführt und mit einer Transportvorrichtung, insbesondere einem Transportband 16, der Kühlvorrichtung 11 zugeführt. Die Kühlvorrichtung 11 ist derart ausgebildet, dass das Transportband 16 mit den daran fixierten oder aufgenommenen Laminatverbünden 14 hindurchgeführt werden kann. Anschließend werden die abgekühlten Laminatverbünde 14 einem Magazin oder einer nachfolgenden Bearbeitungsstation für einen Nachfolgeprozess, wie beispielsweise Stanzen, zugeführt.

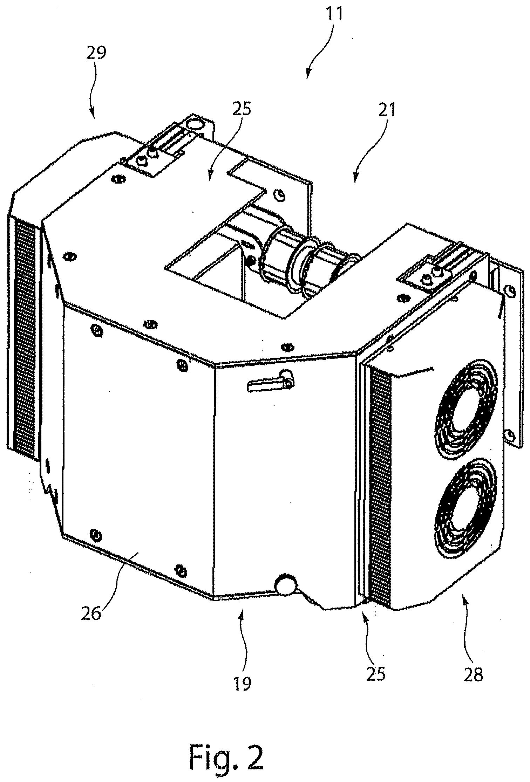

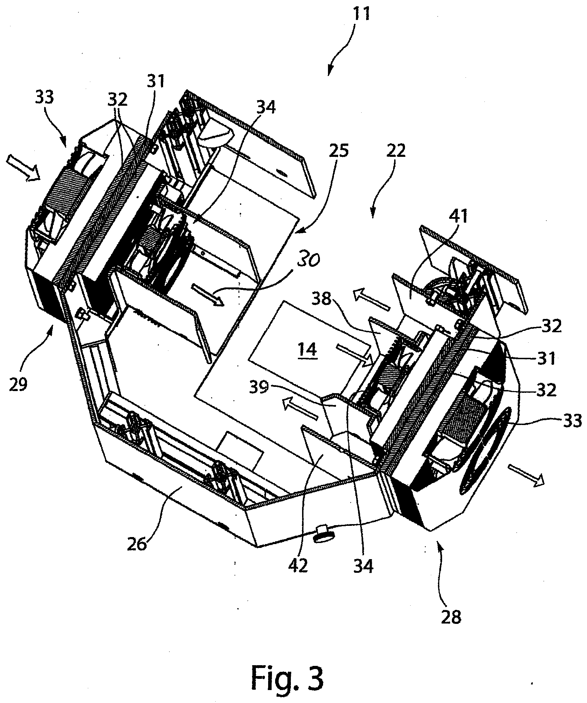

Die Kühlvorrichtung 11 ist perspektivisch in Figur 2 und in einem schematischen Teilschnitt in Figur 3 dargestellt. Diese Kühlvorrichtung 11 umfasst ein Gehäuse 19, welches eine Eingangsöffnung 21 und eine Ausgangsöffnung 22 aufweist. Dazwischen erstreckt sich ein tunnelförmiger Durchgang, entlang dem das Transportband 16 geführt und die Laminatverbünde 14 durch die Kühlvorrichtung 11 hindurchgeführt werden. Die Eingangsöffnung 21 und die Ausgangsöffnung 22 sind jeweils in einer Stirnseite 25 des Gehäuses 19 vorgesehen. Dazwischenliegend ist ein weiterer geschlossener Wandabschnitt 26 vorgesehen. Dieser kann vorteilhafterweise einen öffenbaren Zugang für Wartungsarbeiten aufweisen.

Das Transportband 16 verläuft entlang einer Transportstrecke durch das Gehäuse 19. Beidseitig zur Transportstrecke ist jeweils zumindest eine Kühleinrichtung 28, 29 vorgesehen. Die Kühleinrichtungen 28, 29 sind bevorzugt paarweise einander gegenüberliegend positioniert. Die Kühleinrichtungen 28, 29 sind aufeinander abgestimmt, sodass diese eine Luftströmung gemäß Pfeil 30 erzeugen, welche die Transportstrecke quert beziehungsweise kreuzt. Dadurch kann ein Wärmeabtrag aus dem heißen Laminatverbund 14 erzielt werden. Gleichzeitig kann der Wärmeabtrag aus dem Gehäuse 19 der Kühlvorrichtung 11 nach außen geführt werden.

Die Kühleinrichtung 28, 29 ist bevorzugt als eine thermoelektrische Kühleinrichtung ausgebildet. Eine solche thermoelektrische Kühleinrichtung 28, 29 umfasst Peltierelemente 31 und Kühlrippanordnungen 32 sowie Ventilatoren 33, 34.

In Figur 3 ist eine prinzipielle Anordnung dargestellt. Die Kühleinrichtung 28 umfasst das Peltierelement 31 mit einer zur Außenseite angeordneten Kühlrippenanordnung 32 und einen dieser Kühlrippenanordnung 32 zugeordneten Ventilator 33. Dieser Ventilator 33 weist zur Außenseite des Gehäuses 19 und führt eine erwärmte Luftströmung nach außen ab. Zum Kühlraum oder Gehäuseinnenraum hin ist ein Peltierelement 31 und darauffolgend eine Kühlrippenanordnung 32 vorgesehen, der wiederum ein innenliegender Ventilator 34 zugeordnet ist. Die Strömungsrichtungen dieser Ventilatoren 33, 34 der Kühleinrichtung 28 sind derart ausgerichtet, dass die Strömungsrichtung vom Inneren des Gehäuses 19 nach außen gerichtet ist.

Der Aufbau der zweiten Kühleinrichtung 29, die der ersten Kühleinrichtung 28 gegenüberliegt, ist analog. Die erste und zweite Kühleinrichtung 28, 29 weichen nur dahingehend voneinander ab, dass bei der zweiten Kühleinrichtung 29 der innenliegende Ventilator 34 in der Strömungsrichtung nach innen und nicht nach außen weist, wie dies bei der ersten Kühleinrichtung 28 der Fall ist.

Durch die paarweise Zuordnung der Kühleinrichtungen 28, 29 wird eine Luftströmung von der Kühleinrichtung 29 zur Kühleinrichtung 28 quer zur Transportstrecke erzeugt. Durch die Kühleinrichtung 28 wird die erwärmte Luftströmung nach außen abgeführt.

Zur gezielten Führung der Luftströmung sind sowohl der Kühleinrichtung 28 als auch der Kühleinrichtung 29 Luftleitelemente 38, 39 zugeordnet. Diese grenzen an die innenliegenden Ventilatoren 34 an. Bevorzugt erstrecken sich diese Luftleitelemente 38, 39 in Transportrichtung gesehen zwischen der Eingangsöffnung 21 und der Ausgangsöffnung 22 im Gehäuse 19.

Der ersten Kühleinrichtung 28 sind bevorzugt weitere Strömungselemente 41, 42 zugeordnet, die außerhalb der Luftleitelemente 38, 39 positioniert sind. Dadurch wird ein Teil der Luftströmung, welche durch den innenliegenden Ventilator 34 der Kühlrippenanordnung 32 zugeführt und an dem Peltierelement 31 vorbeigeführt wird, gekühlt in den Innenraum des Gehäuses 19 zurückgeführt. Somit kann eine Luftströmung geschaffen werden, um die freien Bereiche zwischen dem Laminatverbund 14 und dem Transportband 16 einerseits und der Eingangsöffnung 21 beziehungsweise Ausgangsöffnung 22 andererseits zu schließen.

Das Transportband 16 nimmt den Laminatverbund 14 vereinzelt und vorzugsweise stehend auf. Unter stehend wird verstanden, dass der Laminatverbund 14 bezüglich seiner flächigen Erstreckung senkrecht zur Ebene des Transportbandes beziehungsweise zur Transportstrecke ausgerichtet ist. Der Laminatverbund 14 wird bezüglich seiner Vorder- und Rückseite quasi parallel zur Luftströmung gemäß Pfeil 30 ausgerichtet und durch die Kühlvorrichtung 11 hindurchgeführt.

Der Laminatverbund 14 kann ein Wert- und/oder Sicherheitsdokument sein. Dieses Wert- und/oder Sicherheitsdokument kann beispielsweise eine Größe im ID1- oder ID3-Format aufweisen. Sicherheitsdokumente mit einem ID1-Format werden beispielsweise für Scheckkarten, Visakarten, Telefonkarten, Führerscheine, Krankenversicherungskarten oder sonstige Berechtigungsausweise verwendet. Alternativ kann das Sicherheitsdokument ein ID3-Format oder weitere Formate umfassen. Ein ID3-Format wird beispielsweise für eine Personalisierdatenseite in einem Reisepass verwendet. Eine solche Personalisierdatenseite kann ergänzend auch ein Transpondermodul, bestehend aus einem IC-Chip und einer Antenne, umfassen.

Der Laminatverbund 14 in einem ID3-Format kann beispielsweise auch ein Reisepass sein. Bei diesem Reisepass kann ein Bucheinband auf eine Buchdecke laminiert sein. Beispielsweise kann auch ein Vorsatz mit einer Buchdecke laminiert werden, um einen Reisepass zu schaffen. Der Vorsatz ist bevorzugt mit einem Buchblock verbunden.

### Bezugszahlenliste

| | | | |
|---|---|---|---|
| 11. | Kühlvorrichtung | 29. | Kühleinrichtung |
| 12. | Laminationsvorrichtung | 30. | Pfeil |
| 14. | Laminatverbund | 31. | Peltierelement |
| 16. | Transportband | 32. | Kühlrippenanordnung |
| 19. | Gehäuse | 33. | Ventilator außen |
| 21. | Eingangsöffnung | 34. | Ventilator innen |
| 22. | Ausgangsöffnung | 38. | Luftleitelement |
| 23. | Tunnelförmiger Durchgang | 39. | Luftleitelement |
| 25. | Stirnseite | 41. | Strömungselement |
| 26. | Wandabschnitt | 42. | Strömungselement |
| 28. | Kühleinrichtung | | |

## Patentansprüche

1. Kühlvorrichtung für einen aus mehreren Schichten bestehenden Laminatverbund (14),
- mit einem Gehäuse (19), welches eine Transportstrecke zumindest teilweise umgibt, entlang welcher der zumindest eine Laminatverbund (14) verfahren wird,
- mit einer an dem Gehäuse (19) vorgesehenen Eingangsöffnung (21) und Ausgangsöffnung (22), und
- mit beidseitig zur Transportstrecke in dem Gehäuse (19) angeordneten Kühleinrichtungen (28, 29), wobei die Kühleinrichtungen (28, 29) paarweise einander gegenüberliegen, **dadurch gekennzeichnet, dass** die Kühleinrichtungen (28, 29) aufeinander abgestimmt sind, so dass diese eine gemeinsame Luftströmung erzeugen, welche die Transportstrecke kreuzt und eine Kühlstrecke für den zumindest einen Laminatverbund (14) bildet und einen Wärmeabtrag aus dem Gehäuse (19) der Kühlvorrichtung (11) nach außen führt.

2. Kühlvorrichtung nach Anspruch 1, **dadurch gekennzeichnet, dass** das Gehäuse (19) einen tunnelförmigen Durchgang (23) aufweist, entlang dem sich die Transportstrecke erstreckt.

3. Kühlvorrichtung nach Anspruch 1 oder 2, **dadurch gekennzeichnet, dass** jeder Kühleinrichtung (28, 29) Luftleitelemente (38, 39) zugeordnet sind, die sich bis zur Transportstrecke erstrecken und vorzugsweise sich die Luftleitelemente (38, 39) entlang der Transportstrecke zwischen der Eingangsöffnung (21) und der Ausgangsöffnung (22) im Gehäuse (19) erstrecken.

4. Kühlvorrichtung nach einem der vorhergehenden Ansprüche, **dadurch gekennzeichnet, dass** die Kühleinrichtungen (28, 29) als thermoelektrische Kühleinrichtungen (28, 29) ausgebildet sind und vorzugsweise, dass die Kühleinrichtung (28, 29) zumindest ein Peltierelement (31) und zumindest eine daran angeordnete Kühlrippenanordnung (32) aufweist, wobei der Kühlrippenanordnung (32) zumindest ein Ventilator (33, 34) zugeordnet ist.

5. Kühlvorrichtung nach Anspruch 4, **dadurch gekennzeichnet, dass** dem zumindest einen Peltierelement (31) eine zur Innenseite des Gehäuses (19) zugeordnete Kühlrippenanordnung (32) und dieser wiederum ein innenliegender, in das Gehäuse (19) weisender Ventilator (34) zugeordnet ist und dem zumindest einen zur Außenseite des Gehäuses (19) weisenden Peltierelement (31) eine außenliegende Kühlrippenanordnung (32) zugeordnet ist, an welcher ein außenliegender, zur Außenseite des Gehäuses (19) weisender Ventilator (33) vorgesehen ist.

6. Kühlvorrichtung nach einem der Ansprüche 4 oder 5, **dadurch gekennzeichnet, dass** die Kühleinrichtungen (28, 29) paarweise zueinander zur Transportstrecke ausgerichtet sind, wobei bei der ersten Kühleinrichtung (28) der innenliegende Ventilator (34) und außenliegende Ventilator (33) die gleiche Strömungsrichtung aufweisen, und diese Strömungsrichtung zur Außenseite des Gehäuses (19) gerichtet ist und bei der zweiten Kühleinrichtung (29) der innenliegende Ventilator (34) mit einer Strömungsrichtung zur Transportstrecke ausgerichtet ist und der außenliegende Ventilator (33) mit einer Strömungsrichtung nach innen in das Gehäuse (19) ausgerichtet ist.

7. Kühlvorrichtung nach einem der vorhergehenden Ansprüche, **dadurch gekennzeichnet, dass** mehrere paarweise einander zugeordnete Kühleinrichtungen (28, 29) entlang der Transportstrecke im Gehäuse (19) vorgesehen sind.

8. Kühlvorrichtung nach einem der Ansprüche 3 bis 7, **dadurch gekennzeichnet, dass** bei der ersten Kühleinrichtung (28) jeweils außerhalb den Luftleitelementen (38, 39) ein Strömungselement (41, 42) vorgesehen ist, welches einen Teil des Luftstromes von dem ersten innenliegenden Ventilator (33) gekühlt in das Gehäuse (19) zurückführt.

9. Verfahren zum Kühlen von zumindest einem Laminatverbund (14), der aus mehreren Schichten gebildet wird,
- bei dem der aus einer Laminationsvorrichtung (12) herausgeführte zumindest eine Laminatverbund (14) entlang einer Transportstrecke verfahren und durch eine Kühlvorrichtung (11) nach Anspruch 1 hindurchgeführt wird,
- bei dem in der Kühlvorrichtung (11) durch beidseitig zur Transportstrecke angeordnete Kühleinrichtungen (28, 29) eine Luftströmung erzeugt wird, **dadurch gekennzeichnet, dass** die Kühleinrichtungen (28, 29) paarweise einander gegenüberliegen und aufeinander abgestimmt positioniert werden, so dass diese eine gemeinsame Luftströmung erzeugen, welche die Transportstrecke kreuzt und eine Kühlstrecke bildet, innerhalb der die Wärme von dem zumindest einen Laminatverbund (14) durch die Luftströmung aus dem Gehäuse (19) der Kühlvorrichtung (11) nach außen abtransportiert wird.

10. Verfahren nach Anspruch 9, **dadurch gekennzeichnet, dass** die Luftströmung durch zumindest eine erste und eine zweite Kühleinrichtung (28, 29) gebildet wird, die paarweise einander zugeordnet und beidseitig zur Transportstrecke angeordnet sind.

11. Verfahren nach Anspruch 9 oder 10, **dadurch gekennzeichnet, dass** die Luftströmung durch thermoelektrische Kühleinrichtungen (28, 29) erzeugt wird.

12. Verfahren nach einem der Ansprüche 9 bis 11, **dadurch gekennzeichnet, dass** die Luftströmung durch Luftleitelemente (38, 39) geführt wird, welche quer zur Transportstrecke ausgerichtet sind und sich vollständig entlang der Transportstrecke innerhalb des Gehäuses (19) erstrecken.

13. Verfahren nach Anspruch 9, **dadurch gekennzeichnet, dass** der Laminatverbund (14) stehend mit einer Transportvorrichtung durch die Kühlvorrichtung (11) hindurchgeführt und die Luftströmung parallel zur Vorder- und Rückseite des Laminatverbundes (14) ausgerichtet wird.

14. Verfahren nach Anspruch 9, **dadurch gekennzeichnet, dass** ein aus wenigstens zwei unmittelbar miteinander verbundenen Schichten oder aus wenigstens zwei, mit einem Hilfsmaterial verbundenen Schichten gebildeter Laminatverbund (14) gekühlt wird und als Hilfsmittel ein thermisch reaktives Klebemittel oder ein unter Strahlung aktivierbares Klebemittel eingesetzt wird.

15. Verfahren nach Anspruch 9, **dadurch gekennzeichnet, dass** der Laminatverbund (14) aus mehreren Schichten aus voneinander abweichenden Materialien hergestellt wird und eine als Datenseite aus Schichten bestehend aus einem Thermoplast und als eine Lasche aus einer Gewebeschicht oder einer Gewebe- Kunststoff- Verbundschicht oder als ein Reisepass mit einem auf einer Buchdecke aufgebrachten Bucheinband oder als ein Reisepass durch Verbinden eines Buchblockes mit einer Buchdecke ausgebildet wird.

## Claims

1. Cooling device for a multi-layered laminate(14),
- with a housing (19) which at least partially surrounds a transport section along which the at least one laminate composite (14) is moved,
- with an inlet opening (21) and outlet opening (22) provided on the housing (19), and
- with cooling devices (28, 29) arranged on both sides of the transport path in the housing (19), the cooling devices (28, 29) being located opposite one another in pairs, **characterized in that** the cooling devices (28, 29) are matched to one another so that they generate a common air flow, which crosses the transport path and forms a cooling path for the at least one laminate composite (14) and leads a heat removal from the housing (19) of the cooling device (11) to the outside.

2. Cooling device according to claim 1, **characterized in that** the housing (19) has a tunnel-shaped passage (23) along which the transport section extends.

3. Cooling device according to claim 1 or 2, **characterized in that** each cooling device (28, 29) is assigned air guide elements (38, 39) which extend as far as the transport section and preferably the air guide elements (38, 39) extend along the transport section between the inlet opening (21) and the outlet opening (22) in the housing (19).

4. Cooling device according to one of the preceding claims, **characterized in that** the cooling devices (28, 29) are designed as thermoelectric cooling devices (28, 29) and preferably **in that** the cooling device (28, 29) has at least one Peltier element (31) and at least one cooling fin arrangement (32) arranged thereon, at least one fan (33, 34) being assigned to the cooling fin arrangement (32).

5. Cooling device according to claim 4, **characterized in that** the at least one Peltier element (31) is assigned a cooling fin arrangement (32) assigned to the inside of the housing (19) and this in turn is assigned an internal fan (34) pointing into the housing (19) and the at least one Peltier element (31) pointing to the outside of the housing (19) is assigned an external cooling fin arrangement (32), on which an external fan (33) pointing to the outside of the housing (19) is provided.

6. Cooling device according to one of claims 4 or 5, **characterized in that** the cooling devices (28, 29) are aligned in pairs with respect to one another towards the transport section, the internal fan (34) and external fan (33) of the first cooling device (28) having the same flow direction, and this flow direction is directed towards the outside of the housing (19), and in the second cooling device (29) the internal fan (34) is aligned with a flow direction towards the transport section and the external fan (33) is aligned with a flow direction inwards into the housing (19).

7. Cooling device according to one of the preceding claims, **characterized in that** a plurality of cooling devices (28, 29) assigned to one another in pairs are provided along the transport path in the housing (19).

8. Cooling device according to one of claims 3 to 7, **characterized in that** in the first cooling device (28) a flow element (41, 42) is provided outside the air guiding elements (38, 39), which returns a part of the air flow cooled by the first internal fan (33) into the housing (19).

9. Method for cooling at least one multi-layered laminate composite (14)
- in which the at least one laminate composite (14) led out of a laminating device (12) is moved along a transport path and guided through a cooling device (11) according to claim 1,
- in which an air flow is generated in the cooling device (11) by cooling devices (28, 29) arranged on both sides of the transport section, **characterized in that** the cooling devices (28, 29) are positioned opposite one another in pairs and are positioned in a coordinated manner, so that they generate a common air flow which crosses the transport section and forms a cooling section within which the heat from the at least one laminate composite (14) is removed outwards from the housing (19) of the cooling device (11) by the air flow.

10. Method according to claim 9, **characterized in that** the air flow is formed by at least a first and a second cooling device (28, 29), which are assigned to one another in pairs and are arranged on both sides of the transport path.

11. Method according to claim 9 or 10, **characterized in that** the air flow is generated by thermoelectric cooling devices (28, 29).

12. Method according to one of claims 9 to 11, **characterized in that** the air flow is guided by air guiding elements (38, 39) which are aligned transversely to the transport path and extend completely along the transport path inside the housing (19).

13. Method according to claim 9, **characterized in that** the laminate composite (14) is guided upright through the cooling device (11) by a transport device and the air flow is aligned parallel to the front and rear sides of the laminate composite (14).

14. Method according to claim 9, **characterized in that** a laminate composite (14) formed from at least two layers bonded directly to one another or from at least two layers bonded to an auxiliary material is cooled and a thermally reactive adhesive or an adhesive which can be activated by radiation is used as auxiliary material.

15. Method according to claim 9, **characterized in that** the laminate composite (14) is made of several layers of different materials and one is formed as a data page of layers consisting of a thermoplastic and as a flap of a fabric layer or a fabric-plastic composite layer or as a passport with a book cover applied to a book cover or as a passport by bonding a book block to a book cover.

## Revendications

1. Dispositif de refroidissement pour un composite stratifié (14) constitué de plusieurs couches,
- avec un boîtier (19) qui entoure au moins partiellement une voie de transport le long de laquelle le au moins un composite stratifié (14) est déplacé,
- avec un orifice d'entrée (21) et un orifice de sortie (22) prévus sur le boîtier (19), et
- avec des dispositifs de refroidissement (28, 29) disposés de part et d'autre de la voie de transport dans le boîtier (19), les dispositifs de refroidissement (28, 29) étant opposés l'un à l'autre par paires, **caractérisé en ce que** les dispositifs de refroidissement (28, 29) sont adaptés l'un à l'autre de sorte que ceux-ci génèrent un flux d'air commun qui croise la voie de transport et forme une voie de refroidissement pour le au moins un composite stratifié (14) et conduit une évacuation de chaleur hors du boîtier (19) du dispositif de refroidissement (11) vers l'extérieur.

2. Dispositif de refroidissement selon la revendication 1, **caractérisé en ce que** le boîtier (19) présente un passage (23) en forme de tunnel le long duquel s'étend le trajet de transport.

3. Dispositif de refroidissement selon la revendication 1 ou 2, **caractérisé en ce que** des éléments de guidage d'air (38, 39) sont associés à chaque dispositif de refroidissement (28, 29) et s'étendent jusqu'au voie de transport et, de préférence, les éléments de guidage d'air (38, 39) s'étendent le long du voie de transport entre l'ouverture d'entrée (21) et l'ouverture de sortie (22) dans le boîtier (19).

4. Dispositif de refroidissement selon l'une des revendications précédentes, **caractérisé en ce que** les dispositifs de refroidissement (28, 29) sont conçus comme des dispositifs de refroidissement thermoélectriques (28, 29) et, de préférence, **en ce que** le dispositif de refroidissement (28, 29) comprend au moins un élément Peltier (31) et au moins un ensemble d'ailettes de refroidissement (32) disposé sur celui-ci, au moins un ventilateur (33, 34) étant associé à l'ensemble d'ailettes de refroidissement (32).

5. Dispositif de refroidissement selon la revendication 4, **caractérisé en ce qu'**à l'au moins un élément Peltier (31) est associé un agencement d'ailettes de refroidissement (32) orienté vers le côté intérieur du boîtier (19) et à celui-ci à nouveau un ventilateur orienté vers l'intérieur, au moins un élément Peltier (31) orienté vers le côté extérieur du boîtier (19) est associé un agencement d'ailettes de refroidissement (32) situé à l'extérieur, sur lequel est prévu un ventilateur (33) situé à l'extérieur et orienté vers le côté extérieur du boîtier (19).

6. Dispositif de refroidissement selon l'une des revendications 4 ou 5, **caractérisé en ce que** les dispositifs de refroidissement (28, 29) sont orientés par paires l'un par rapport à l'autre vers la voie de transport, dans lequel, pour le premier dispositif de refroidissement (28), le ventilateur intérieur (34) et le ventilateur extérieur (33) ont le même sens d'écoulement, et ce sens d'écoulement est orienté vers le côté extérieur du boîtier (19) et, dans le cas du deuxième dispositif de refroidissement (29), le ventilateur intérieur (34) est orienté avec un sens d'écoulement vers la voie de transport et le ventilateur extérieur (33) est orienté avec un sens d'écoulement vers l'intérieur dans le boîtier (19).

7. Dispositif de refroidissement selon l'une des revendications précédentes, **caractérisé en ce que** plusieurs dispositifs de refroidissement (28, 29) associés par paires sont prévus le long du trajet de transport dans le boîtier (19).

8. Dispositif de refroidissement selon l'une quelconque des revendications 3 à 7, **caractérisé en ce que**, dans le premier dispositif de refroidissement (28), il est prévu, à l'extérieur de chacun des éléments de guidage d'air (38, 39), un élément d'écoulement (41, 42) qui renvoie dans le boîtier (19) une partie du flux d'air provenant du premier ventilateur (33) situé à l'intérieur et refroidi.

9. Procédé de refroidissement d'au moins un composite stratifié (14) formé de plusieurs couches,
- dans lequel le au moins un composite stratifié (14) sorti d'un dispositif de stratification (12) est déplacé le long d'un trajet de transport et passé à travers un dispositif de refroidissement (11) selon la revendication 1,
- dans lequel un courant d'air est généré dans le dispositif de refroidissement (11) par des dispositifs de refroidissement (28, 29) disposés de part et d'autre de la voie de transport, **caractérisé en ce que** les dispositifs de refroidissement (28, 29) sont opposés par paires et sont positionnés de manière adaptée l'un à l'autre, de sorte que ceux-ci génèrent un courant d'air commun qui croise la voie de transport et forme une voie de refroidissement à l'intérieur de laquelle la chaleur du au moins un composite stratifié (14) est évacuée vers l'extérieur par le courant d'air hors du boîtier (19) du dispositif de refroidissement (11).

10. Procédé selon la revendication 9, **caractérisé en ce que** le flux d'air est formé par au moins un premier et un deuxième dispositif de refroidissement (28, 29), qui sont associés par paires et disposés de part et d'autre de la voie de transport.

11. Procédé selon la revendication 9 ou 10, **caractérisé en ce que** le flux d'air est généré par des dispositifs de refroidissement thermoélectriques (28, 29) .

12. Procédé selon l'une quelconque des revendications 9 à 11, **caractérisé en ce que** le flux d'air est guidé par des éléments de guidage d'air (38, 39) qui sont orientés transversalement au voie de transport et qui s'étendent entièrement le long du voie de transport à l'intérieur du boîtier (19).

13. Procédé selon la revendication 9, **caractérisé en ce que** le composite stratifié (14) est guidé debout à travers le dispositif de refroidissement (11) à l'aide d'un dispositif de transport et **en ce que** le flux d'air est orienté parallèlement aux faces avant et arrière du composite stratifié (14).

14. Procédé selon la revendication 9, **caractérisé en ce qu'**un composite stratifié (14) formé d'au moins deux couches directement reliées l'une à l'autre ou d'au moins deux couches reliées par un matériau auxiliaire est refroidi et qu'un adhésif thermiquement réactif ou un adhésif activable par rayonnement est utilisé comme auxiliaire.

15. Procédé selon la revendication 9, **caractérisé en ce que** le composite stratifié (14) est fabriqué à partir de plusieurs couches de matériaux différents les uns des autres et en tant que page de données à partir de couches constituées d'un thermoplastique et en tant que languette à partir d'une couche de tissu ou d'une couche composite de tissu et de plastique ou en tant que passeport avec une couverture de livre appliquée sur une couverture de livre ou en tant que passeport en reliant un bloc de livre à une couverture de livre.
